(19) Europäisches Patentamt
European Patent Office
Office européen des brevets

(11) Veröffentlichungsnummer: **0 027 931**
**B1**

(12) # EUROPÄISCHE PATENTSCHRIFT

(45) Veröffentlichungstag der Patentschrift: **27.07.83**

(21) Anmeldenummer: **80106125.0**

(22) Anmeldetag: **09.10.80**

(51) Int. Cl.³: **C 08 F 220/32,** C 08 F 220/06 // (C08F220/32,220/06), (C08F220/06, 220/32)

(54) **Verfahren zur Herstellung von OH-Gruppen enthaltenden Copolymerisaten und deren Verwendung.**

(30) Priorität: **19.10.79 DE 2942327**

(43) Veröffentlichungstag der Anmeldung: **06.05.81 Patentblatt 81/18**

(45) Bekanntmachung des Hinweises auf die Patenterteilung: **27.07.83 Patentblatt 83/30**

(84) Benannte Vertragsstaaten: **AT BE CH DE FR GB IT LI NL SE**

(56) Entgegenhaltungen:
**EP-A-0 000 608**
**DE-A-2 057 577**

(73) Patentinhaber: **HOECHST AKTIENGESELLSCHAFT, Postfach 80 03 20, D-6230 Frankfurt/Main 80 (DE)**

(72) Erfinder: **Fischer, Hannes, Dr., Bachstrasse 22, D-6204 Taunusstein (DE)**
Erfinder: **Plum, Helmut, Dr., Rochusstrasse 40, D-5132 Übach-Palenberg (DE)**

**EP 0 027 931 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von OH-Gruppen enthaltenden Copolymerisaten und deren Verwendung

Die Herstellung von fremdvernetzbaren, hydroxylgruppenhaltigen Copolymerisaten durch radikalische Polymerisation in Lösung ist bekannt. Diese Verfahren sind jedoch zur Herstellung niedrigviskoser, lösungsmittelarmer oder lösungsmittelfreier Mischpolymerisate im allgemeinen wenig geeignet, entweder weil sie hohe Drücke zur Durchführung der Polymerisation benötigen, weil die Polymerisation in hochsiedenden Lösungsmitteln durchgeführt wird, die nach Polymerisationsende durch eine Vakuumdestillation entfernt werden müssen, weil die Eigenschaften des Polymerisats durch die Bruchstücke der in beträchtlichen Mengen eingesetzten Polymerisationsregler und -initiatoren beeinträchtigt werden, oder weil die verwendeten Polymerisationsregler übel riechen oder giftig sind.

Andererseits ist auch die Polymerisation in Substanz bekannt. Der große Vorteil einer Substanzpolymerisation ist, daß in der Reaktionsmasse nur Monomeres, Polymeres und Initiator anwesend sind und daher sehr reine, lösungsmittelfreie Produkte entstehen. In der Praxis sind Beispiele für eine solche Polymerisation jedoch selten, weil sich durch das Freiwerden sehr großer Wärmemengen in kurzer Reaktionszeit sehr große Schwierigkeiten ergeben. Um diese Schwierigkeiten zu umgehen, beendet man bei den bekannten Verfahren die Polymerisation entweder bei einem geringen Umsatz und destilliert die restlichen Monomeren ab oder man polymerisiert in zwei Stufen. In der ersten Stufe wird bis zu einem mittleren Umsetzungsgrad polymerisiert und dann in der zweiten Stufe die Polymerisation in dünner Schicht in geeigneten Vorrichtungen zu Ende geführt. Dieses Verfahren ist jedoch verhältnismäßig umständlich.

In der DE-A-2 840 251 wird ein Verfahren zur Herstellung von radikalisch initiierten Substanzpolymerisaten beschrieben. Das Verfahren ist jedoch auf Copolymere aus Acrylmonomeren und ungesättigten Monomeren, vorzugsweise auf Fumar- und Maleinsäurediester beschränkt. Dabei werden vorzugsweise solche Acrylmonomeren eingesetzt, deren Homopolymerisate Glasumwandlungstemperaturen von $-40°C$ oder weniger aufweisen. Die beschriebenen Copolymerisate eignen sich nur als Schmier-, Netz- oder Verlaufsmittel oder als Weichmacher.

Die DE-A-2 703 311 beschreibt die Herstellung eines Acrylharzes durch Copolymerisation in Masse von

1) Acryl- und/oder Methacrylsäure-hydroxyalkylester,
2) Styrol oder dessen Derivaten,
3) Acryl- und/oder Methacrylsäure-alkylestern,
4) olefinisch ungesättigten Mono- oder Dicarbonsäuren, z. B. Acryl- oder Methacrylsäure oder Maleinsäurehalbester und
5) Monoallyläthern eines dreiwertigen Alkohols.

Hierbei ist die unter 5) genannte Komponente ein wesentlicher Bestandteil für die Copolymerisation, denn bei dieser Verfahrensweise ist die Copolymerisation in Masse nur mit den Komponenten 1) bis 4) nicht durchführbar. Wie sich aus der Beschreibung dieser Druckschrift ergibt, hat dieses Verfahren jedoch den Nachteil, daß nicht umgesetztes Monomeres zurückbleibt, das im Endprodukt störend wirkt. Dieser Restanteil kann etwa 5 bis 64 Gew.-%, bezogen auf das eingesetzte Monomere 5), betragen.

Aus der DE-A-2 422 043 ist die Substanz-Copolymerisation von

A) Vinyl- oder Vinylidenchlorid oder einem Monocarbonsäurevinylester,
B) Vinylaromaten,
C) gegebenenfalls Acrylsäureestern von ein- oder zweiwertigen Alkoholen und weiteren copolymerisierbaren Monomeren beschrieben.

In der DE-B-2 626 990 ist die Herstellung von OH-Gruppen enthaltenden Copolymeren aus Styrol, Methylmethacrylat, Hydroxyäthylmethacrylat, Acrylsäure und Glycidylestern von Mono- und/oder Dialkylalkanmonocarbonsäuren in einem speziellen gegenseitigen Mengenverhältnis beschrieben. Hierbei handelt es sich um eine Polymerisation in organischen Lösungsmitteln in Anwensenheit von Polymerisationsinitiatoren und gegebenenfalls Kettenabbrechern, wobei mindestens 30 Gew.-% Lösungsmittel eingesetzt werden, so daß Produkte mit einem Feststoffgehalt von 61 bis 70 Gew.-% entstehen. Auch in diesem Fall müssen die hohen Anteile an Lösungsmittel und Polymerisationsinitiator bzw. Regler aus dem Produkt entfernt werden, weil sonst die Eigenschaften der Produkte ungünstig beeinflußt werden. Auch ist dieses Verfahren nicht zur Herstellung von niedrigviskosen Copolymeren geeignet.

Für eine Ausbeute von über 98% kann diese Polymerisation jedoch nur innerhalb eines verhältnismäßig engen Temperaturbereiches von 150 bis 180°C durchgeführt werden. Wie die Beispiele dieser Druckschrift zeigen, werden nach diesem Verfahren nur Produkte mit einem verhältnismäßig hohen Molekulargewicht erhalten. Außerdem kann die Komponente A) nur dann

unter normalem Druck copolymerisiert werden, wenn ein Ester einer Monocarbonsäure mit über 9 C-Atomen verwendet wird.

Es war daher ein Copolymerisationsverfahren in Masse erwünscht, das lösungsmittelfreie, niedrigviskose und reine Produkte liefert und das sich innerhalb eines breiteten Temperaturbereiches durchführen läßt.

Die vorliegende Erfindung betrifft nun ein Verfahren zur Herstellung von niedrigviskosen OH-Gruppen enthaltenden Copolymerisaten durch radikalische Umsetzung von

A) 10 bis 30 Gew.-% 12 bis 14 C-Atome enthaltenden Glycidylestern aliphatischer gesättigter Monocarbonsäuren mit einem tertiären oder quartären $\alpha$-C-Atom und
B) 90 bis 70 Gew.-% von mindestens zwei ungesättigten copolymerisierbaren Monomeren, von denen mindestens eines mindestens eine COOH-Gruppe enthält, das dadurch gekennzeichnet ist, daß die Komponente A) vorgelegt und bei 140 bis 200°C mit der Komponente B) und einem radikalischen Initiator in einer Substanzpolymerisation so lange umgesetzt wird, bis ein Umsetzungsgrad von mindestens 95, vorzugsweise mindestens 98% erreicht ist, wobei die Komponente B) mindestens 3,3 Gew.-% eines COOH-Gruppen aufweisenden Monomeren enthält.

Unter dem Begriff »Substanz-Polymerisation« ist eine Polymerisation zu verstehen, die in der Regel ohne Lösungsmittel durchgeführt wird. In manchen Fällen ist jedoch auch die Anwesenheit von einem geringen Lösungsmittelanteil, nämlich bis zu 5, vorzugsweise bis zu 3 Gew.-%, bezogen auf die Ausgangskomponenten, möglich. Jedoch ist das arbeiten ohne Lösungsmittel vorzuziehen.

Geeignete Lösungsmittel sind z. B. hochsiedende aliphatische und/oder aromatische Lösungsmittel mit einem Siedepunkt von 140 bis 185°C, wie Mineralöl mit einem Siedepunkt von 160 bis 180°C, Xylole, Toluol, Ester, wie Butylacetat, Äthylenglykolacetatmonoäthyl-, -methyl- oder butyläther, Alkohole oder dergleichen.

Das erfindungsgemäße Verfahren gestattet die lösungsmittelfreie Herstellung von OH-Gruppen enthaltenden Acrylat-Copolymerisaten auf einfache Weise, wobei gerade die gewünschten niederviskosen, also niedermolekularen Produkte mit hoher Reinheit erhalten werden.

Durch die Vorlage der Komponente A) wird nicht nur ein anfänglicher Lösungseffekt für die zu polymerisierenden Monomeren B), sondern gleichzeitig auch eine gute und rasche Abführung der Reaktionswärme und im Laufe der Reaktion ein so vollständiger Einbau des Glycidylesters in das Copolymerisationsprodukt erzielt, daß keine unumgesetzten störenden Bestandteile mehr im Endprodukt vorhanden sind.

Ein Vorteil der erfindungsgemäßen Umsetzung liegt darin, daß sie sich ohne Regler durchführen läßt und daß daher die Produkte frei von giftigen und übelriechenden Bestandteilen sind. Ein weiterer Vorteil des erfindungsgemäßen Verfahrens ist dadurch gegeben, daß es infolge der einfachen Verfahrensführung in jedem Reaktionsgemäß, das auch für die Polymerisation in Lösung geeignet ist, durchgeführt werden kann. Dabei läßt sich die auftretende Polymerisationswärme einwandfrei beherrschen. Ein besonderer Vorteil dieses Polymerisationsverfahrens ist eine bessere Ausbeute an Copolymerisat im vorhandenen Reaktionsgefäß.

Die nach dem erfindungsgemäßen Verfahren hergestellten Mischpolymerisate zeichnen sich durch eine besonders niedrige Lösungsviskosität aus. Im allgemeinen liegt sie im Bereich von 30 bis 2000, vorzugsweise 70 bis 700 mPa · s (50% in Xylol/20°C). Sie eignen sich gut für die Anwendung in 2-Komponenten-Systemen, besonders für sogenannte »High-solid«-Systeme, also für lösungsmittelhaltige Mischungen mit hohem Festkörpergehalt.

Für das erfindungsgemäße Verfahren kommen die üblichen radikalbildenden Verbindungen als Polymerisationsinitiatoren in Frage. Solche sind z. B. aliphatische Azoverbindungen, wie Azoisobuttersäurenitril, Diacylperoxid, wie Di-benzoylperoxid, Dialkylperoxide, wie Di-tert.-butylperoxid oder Alkylhydroperoxide, wie tert.-Butylhydroperoxide. Besonders bevorzugt ist Di-tert-butylperoxid. Der Anteil der Initiatoren kann z. B. 0,5 bis 2,5, vorzugsweise bis 1,9 Gew.-%, bezogen auf das Gesamtgewicht der Ausgangskomponenten, betragen.

Zweckmäßig besteht die Komponente B) aus einem Gemisch von olefinisch ungesättigten Monomeren, insbesondere sauren Acrylmonomeren und vinylaromatischen Kohlenwasserstoffen wie Styrol, Alkylstyrolen, z. B. $\alpha$-Methylstyrol, $\alpha$-Chlorstyrol, den verschiedenen Vinyltoluolen, jeweils einzeln oder im Gemisch. Geeignete saure Acrylmonomere sind z. B. Acryl- und/oder Methacrylsäure und/oder Maleinsäurehalbester, Maleinsäure. Monomere ohne COOH-Gruppen sind z. B. Acryl- und/oder Methacrylsäureester aus einwertigen Alkoholen mit 1 bis 8 C-Atomen und die Hydroxyalkylester dieser Säuren mit 2 bis 4 C-Atomen im Hydroxyalkylrest, ferner Acrylnitril. Geeignete Acrylester sind z. B. die Methyl-, Äthyl-, tert.-Butyl-, 2-Äthylhexyl-, Hydroxyäthyl- und Hydroxypropylester der Acryl- bzw. Methacrylsäure.

Im Ausgangsmonomerengemisch besteht die Komponente B) zweckmäßig aus einem Gemisch von

a) 3,3 bis 20, vorzugsweise 3,3 bis 15 Gew.-% einer $\alpha,\beta$-ungesättigten Monocarbonsäure, vorzugsweise Acryl- oder Methacrylsäure oder deren Mischungen,
b) 0 bis 43, vorzugsweise 17 bis 43 Gew.-% eines Hydroxyalkylesters der Acrylsäure oder

Methacrylsäure mit 2 bis 4 C-Atomen im Hydroxyalkylrest oder dessen Mischungen,

c) 0 bis 57, vorzugsweise 5 bis 29 Gew.-% eines Esters des Acryl- oder Methacrylsäure mit einem einwertigen Alkohol mit 1 bis 8 C-Atomen oder dessen Mischungen,

d) 0 bis 72, vorzugsweise 22 bis 50 Gew.-% mindestens eines Vinylaromaten, wobei die Summe der Komponenten B stets 100 ist und wobei die Summe der Ester zweckmäßig nicht mehr als 75 Gew.-% beträgt.

Während der Polymerisationsreaktion bildet sich aus dem sauren Acrylmonomeren und dem vorgelegten Glycidylester ein Umsetzungsprodukt, das im erfindungsgemäß erhaltenen Copolymerisat im allgemeinen in einem Anteil von 13,3 bis 50, vorzugsweise 13,3 bis 45 Gew.-% vorliegt.

Die erfindungsgemäß erhaltenen Produkte eignen sich als solche oder in Form von Lösungen als Bindemittel zur Herstellung von Überzügen. Sie können in Gegenwart von geeigneten Vernetzern kalt oder bei erhöhter Temperatur gehärtet werden. Geeignete Lösungsmittel für die erfindungsgemäß erhaltenen Produkte sind z. B. aromatische Kohlenwasserstoffe, wie Benzol, Alkylbenzole, z. B. Xylol, Toluol; Monocarbonsäureester, wie Äthylacetat, Butylacetat, Äthylenglykolmonoäthylätheracetat, das entsprechende Methylätheracetat oder dergleichen.

Für die Härtung der erfindungsgemäßen Produkte, besonders bei Raumtemperatur, unter Vernetzung eignen sich bevorzugt Polyisocyanate. Die Vernetzung kann durch Zusatz von organischen Zinnverbindungen, wie Dibutylzinndilaurat, Dibutylzinndiacetat, Dibutyloxozinn und gegebenenfalls tertiären Aminen, vorzugsweise Diäthyläthanolamin, katalysiert werden. Für eine Härtung bei erhöhter Temperatur kommen zusätzlich verkappte Polyisocyanate, Polycarbonsäuren bzw. deren Anhydride in Frage.

Geeignete Isocyanate sind aliphatische, cycloaliphatische oder aromatische Polyisocyanate, wie Hexamethylendiisocyanat, Isophorondiisocyanat oder Toluylen-2,4-diisocyanat oder der deren Mischungen.

Vorzugsweise werden Urethangruppen und/oder Biuretgruppen enthaltende Polyisocyanate verwendet, wie sie aus den Diisocyanaten 2,4- und 2,6-Toluylendiisocyanat, Hexamethylendiisocyanat-1,6, Diphenylmethan-4,4'-diisocyanat und/oder 3-Isocyanatomethyl-3,5,5-trimethylcyclohexylisocyanat gebildet werden.

Besonders bevorzugt ist ein Biuretgruppen enthaltendes Polyisocyanat, das aus 3 Molen Hexamethylendiisocyanat und einem Mol Wasser entsteht.

Geeignete Vernetzer sind ferner Aminoplastharze oder Phenolharze, die in Gegenwart von Säuren, z. B. p-Toluolsulfonsäure aushärten. Die Heißhärtung kann in üblicher Weise bei Temperaturen von 120 bis 200° C, z. B. in 10 bis 30 Minuten vorgenommen werden.

Die erfindungsgemäß hergestellten Produkte eignen sich gut zur Herstellung von Pulverlacken in Verbindung mit Polycarbonsäureanhydriden. Sie lassen sich zur Umsetzung mit Polycarbonsäureanhydriden und zur Weiterverwendung der so erhaltenen Produkte als Härter für verschiedene Kunstharze, insbesondere Epoxydharze, einsetzten.

Von besonderem Interesse ist die Verwendung der erfindungsgemäß hergestellten Produkte zusammen mit speziellen Polycarbonsäureteilestern oder Einheiten von Polycarbonsäuren bzw. deren Anhydriden oder Esteranhydriden, z. B. solchen der Formeln I, II und III (siehe Formelblatt) bzw. deren Anhydride oder dergleichen zur Härtung von Polyepoxyden, worin in obigen Formeln

| | |
|---|---|
| R, R' und R'' | gleich oder verschieden sind und 2- bis 6wertige, vorzugsweise 2wertige geradkettige oder verzweigte Kohlenwasserstoffreste mit insgesamt 1 bis 12, vorzugsweise 2 bis 6 C-Atomen, die gegebenenfalls bis zu zwei olefinische Doppelbindungen aufweisen oder durch bis zu drei Ätherbrücken unterbrochen sind, |
| $R^1$ | einen aromatischen Rest der Gruppe Phenyl, Naphthyl, Phenanthryl und Aminonaphthyl, einen heterocyclischen Tetrahydrofurylrest, |
| x | eine ganze Zahl von 2 bis 6, |
| y | eine ganze Zahl von 2 bis 6, |
| z und u | Null oder eine ganze Zahl von 1 bis 5 und |
| t | eine ganze Zahl von 1 bis 5 |

bedeuten, wobei in den hier nur linear, d. h. für zweiwertige Reste R, R' und R'' wiedergegebenen Formeln außer bei den Resten R' und R'' auch bei dem Rest R Verzweigungen vorliegen können. Derartige verzweigte Polycarbonsäuren lassen sich durch eine einzige Formel nicht ohne weiteres darstellen. Wenn aufgrund der möglichen höheren Wertigkeit als 2 von R, R' und R'' die Verbindungen I) bis III) verzweigt sind, können in den verschiedenen Zweigen die Indices x, z und u gleich oder verschieden sein.

Bevorzugte Polycarbonsäureeinheiten sind z. B. Polyanhydride, die sich von mindestens vierwertigen Carbonsäuren herleiten und mit denen die erfindungsgemäß hergestellten Produkte umgesetzt werden können. Diese Systeme sind wegen ihrer hohen Reaktivität insbesondere für eine Kalthärtung interessant.

In den folgenden Beispielen bedeuten T Gewichtsteile und % Gewichtsprozent.

## Beispiele

### I) Herstellung der Copolymerisate

In einem mit Rührwerk, Inertgaseinleitung, Heiz- und Kühlsystem und einer Zugabeeinrichtung ausgestatteten Reaktor wird der Glycidylester einer $\alpha,\alpha$-Dialkylalkanmonocarbonsäure ($C_{9-11}$) vorgelegt und unter Inertgas auf die gewünschte Temperatur aufgeheizt. Dann wird innerhalb von 7 Stunden die Monomerenmischung zusammen mit dem Initiator gleichmäßig zudosiert. Anschließend wird nachpolymerisiert, bis ein Umsatz von mindestens 98% erreicht ist.

Die Ansätze in Gewichtsteilen, Reaktionsbedingungen und Kennzahlen der Produkte sind aus nachstehender Tabelle ersichtlich.

| | Beispiele | | | |
|---|---|---|---|---|
| | A | B | C | D |
| Glycidylester | 20,4 | 12,9 | 19,5 | 9,4 |
| Acrylsäure | 6,1 | 4,1 | 6,8 | 3,0 |
| Hydroxyäthylmethacrylat | 13,1 | 27,8 | 16,1 | 24,6 |
| Styrol | 38,2 | 46,7 | 32,5 | 35,0 |
| Methylmethacrylat | 20,7 | 7,5 | 24,1 | 26,9 |
| di-t.-Butylperoxid | 1,5 | 1,0 | 1,0 | 1,1 |
| Polymerisationstemperatur, °C | 185 | 190 | 160 | 175 |
| Säurezahl | 8 | 9 | 13 | 7 |
| Hydroxylzahl | 106 | 140 | 112 | 133 |
| Viskosität (50%ig in Xylol) | 90 | 185 | 900 | 170 |

### II) Herstellung der Lacke

Aus den Festharzen B bis D werden 60%ige Lösungen in einem Lösungsmittelgemisch aus 2 T Xylol, 1 T Äthylenglykolmonoäthylätheracetat hergestellt. Mit diesen Lösungen werden entsprechend den nachfolgenden Formulierungen Lacke angefertigt:

| | B | C | D |
|---|---|---|---|
| Copolymer-Lösung | 71,16 | 75,62 | 73,85 |
| Dibutylzinndilaurat (1%ig in Xylol) | 0,25 | 0,25 | 0,25 |
| Diäthyläthanolamin | 0,40 | 0,40 | 0,40 |
| Silicon (1%ig in Xylol) | 1,00 | 1,00 | 1,00 |
| Umsetzungsprodukt von Hexamethylendiisocyanat und Wasser (75%ig in Äthylenglykolmonoäthylätheracetat) | 27,19 | 22,73 | 24,50 |

X) (Isocyanatgehalt 16,5%)

Die Polymer-Lösungen werden mit einem Lösungsmittelgemisch aus Xylol, einem aromatischen Kohlenwasserstoff-Gemisch (Siedebereich 165 bis 175°C), Butylacetat, Äthylenglykolmonoäthylätheracetat (Gewichtsverhältnis 40 : 25 : 20 : 15) auf eine Viskosität (DIN 53 211/20° C) von 50 s eingestellt und dann in einer Naß-Schichtdicke von 100 µm auf Glasplatten und Stahlbleche aufgezogen. Die Filme werden bei Raumtemperatur an der Luft getrocknet.

III) Lacktechnische Prüfung

Die Klebfreitrocknung wurde durch Auflegen der Handkante auf die Lackoberfläche ermittelt.

Zur Bestimmung der Staubtrocknung wurden Reflexionsperlen mit einem Durchmesser von 0,1 bis 0,4 mm mittels einer Pipette über eine Breite von 5 mm auf den Lackfilm aufgetragen. Danach wurde die mit dem Lack beschichtete Glasplatte schräg gestellt und abgeklopft. Wenn alle Perlen abfielen, so war der Film staubtrocken. Die Prüfungen zeigen folgende Ergebnisse:

| | B | C | D |
|---|---|---|---|
| Staubtrocken, min. | 15 | 17 | 17 |
| Klebfrei-trocken, min. | 130 | 92 | 172 |
| Pendelhärte s nach König DIN 53 157 nach 24 h. | 101 | 94 | 93 |
| Erichsentiefung DIN 53 156 nach 10 Tagen | 9,1 | 9,4 | 9,3 |
| Benzinbeständigkeit, min. nach 10 Tagen | >30 | >30 | >30 |
| Festkörpergehalt, % 1 h/125°C | 65,7 | 53,0 | 62,3 |

Mit dem Produkt gemäß Beispiel A erhält man Lacke mit gleich guten Eigenschaften.

Formelblatt

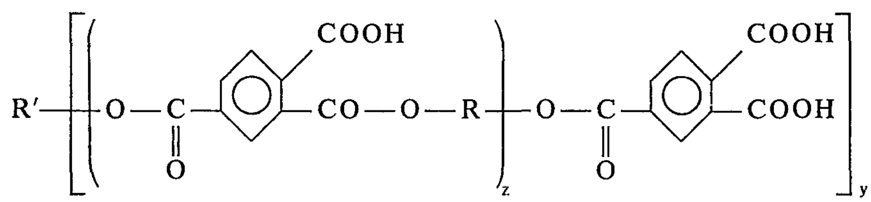
(I)

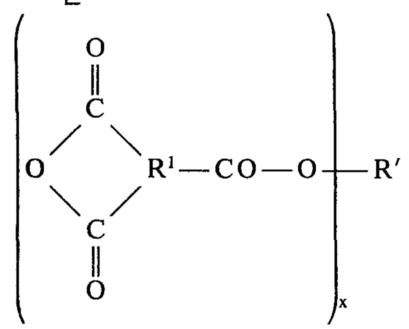
(II)

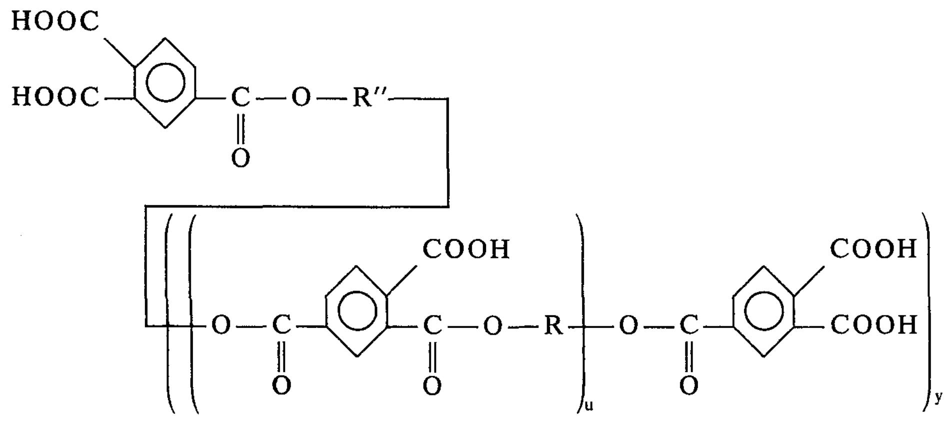
(III)

**Patentansprüche**

1. Verfahren zur Herstellung von OH-Gruppen enthaltenden Copolymerisaten durch radikalische Umsetzung von

A) 10 bis 30 Gew.-% 12 bis 14 C-Atome enthaltenden Glycidylestern aliphatischer gesättigter Monocarbonsäuren mit einem teriären oder quartären $\alpha$-C-Atom und
B) 90 bis 70 Gew.-% von mindestens zwei ungesättigten copolymerisierbaren Monomeren, von denen mindestens eines mindestens eine COOH-Gruppe enthält,

wobei die Komponente A) vorgelegt und bei mindestens 140°C mit der Komponente B) und einem radikalischen Initiator polymerisiert wird und die Komponente B) ein COOH-Gruppen aufweisendes Monomeres enthält, dadurch gekennzeichnet, daß zur Herstellung eines niedrigviskosen Copolymerisats die Komponente A) vorgelegt und bei 140 bis 200°C mit der Komponente B) in einer Substanzpolymerisation so lange umgesetzt wird, bis ein Umsetzungsgrad von mindestens 95% erreicht ist, wobei die Komponente B) mindestens 3,3 Gew.-% des COOH-Gruppen aufweisenden Monomeren enthält.

2. Verfahren nach Anspruch 1, dadurch gekennzeichnet, daß die Komponente B) aus einem Gemisch von Acrylmonomeren und Vinylaromaten besteht.

3. Verfahren nach Anspruch 1 oder 2, dadurch gekennzeichnet, daß Komponente B) aus einem Gemisch von

a) 3,3 bis 20 Gew.-% Acryl- und/oder Methacrylsäure,
b) 0 bis 43 Gew.-% mindestens eines Acryl- und/oder Methacrylsäurehydroxyalkylesters mit 2 bis 4 C-Atomen im Hydroxyalkylrest,
c) 0 bis 57 Gew.-% mindestens eines Acryl- und/oder Methacrylsäureesters eines einwertigen Alkohols mit 1 bis 8 C-Atomen und
d) 0 bis 72 Gew.-% mindestens eines Vinylaromaten

besteht,
wobei die Summe der Komponenten B) stets 100 ist und wobei die Summe der Ester b) und c) zweckmäßig nicht mehr als 75 Gew.-% beträgt.

4. Verfahren nach einem oder mehreren der Ansprüche 1 bis 3, dadurch gekennzeichnet, daß die Copolymerisation in Anwesenheit von bis zu 5 Gew.-% eines Lösungsmittels durchgeführt wird.

5. Verwendung der nach Ansprüchen 1 bis 4 erhaltenen Produkte zur Herstellung von Überzügen.

6. Verwendung nach Anspruch 5 im Gemisch mit Polyisocyanaten allein oder zusammen mit organischen Zinnverbindungen und gegebenenfalls tertiären Aminen.

7. Verwendung nach Anspruch 5 oder 6, dadurch gekennzeichnet, daß zur Herstellung von wärmegehärteten Überzügen die OH-Gruppen enthaltenden Copolymerisate zusammen mit einem Härter in Form von gegebenenfalls verkappten Polyisocyanaten, Polycarbonsäuren und/oder deren Anhydriden, Aminharzen oder Phenolharzen, jeweils einzeln oder im Gemisch eingesetzt werden.

8. Verwendung nach Anspruch 5, 6 oder 7, dadurch gekennzeichnet, daß die OH-Gruppen enthaltenden Copolymerisate in Form von Reaktionsprodukten mit Polycarbonsäureanhydriden zur Härtung von Polyepoxydverbindungen eingesetzt werden.

**Claims**

1. A process for the preparation of copolymers containing hydroxy groups, formed by radical reaction of

A) 10 to 30% by weight of glycidyl esters containing 12 to 14 carbon atoms, of aliphatic saturated monocarboxylic acids having a tertiary or quaternary $\alpha$-carbon atom and
B) 90 to 70% by weight of at least two unsaturated copolymerisable monomers at least one of which contains at least one COOH-group,

wherein component A) is introduced first to a reaction zone and is then polymerised at a temperature of at least 140°C with component B) and a radical initiator and component B) contains a monomer having COOH-groups, characterized in that for the preparation of a low-viscosity copolymer component A) is introduced first to a reaction zone and is then reacted at from 140 to 200°C with component B) by substance polymerisation until a degree of reaction of at least 95% is achieved, component B) containing at least 3.3% by weight of the monomer having carboxyl groups.

2. A process according to claim 1, characterized in that component B) consists of a mixture of acrylic monomers and vinylaromatic compounds.

3. A process according to claim 1 or 2, characterized in that component B) consists of a mixture of

a) from 3.3 to 20% by weight of acrylic acid and/or methacrylic acid,
b) from 0 to 43% by weight of at least one hydroxyalkyl ester of acrylic acid and/or methacrylic acid, which ester has from 2 to 4 carbon atoms in the hydroxyalkyl radical,
c) from 0 to 57% by weight of at least one ester of a monohydric alcohol having 1 to 8 carbon atoms and of acrylic acid and/or methacrylic acid, and
d) from 0 to 72% by weight of at least one vinylaromatic compound,

wherein the total of components B) is always 100 and the total of esters b) and c) suitably is not more than 75% by weight.

4. A process according to one or more of claims 1 to 3, characterized in that the copolymerisation is carried out in the presence of up to 5% of a solvent.

5. Use of the products obtained according to the process of one or more of the claims 1 to 4 for the preparation of coatings.

6. Use according to claim 5 in admixture with polyisocyanates alone or together with organic tin compounds and, if desired, tertiary amines.

7. Use according to claim 5 or 6, characterized in that for the preparation of heat-hardened coatings the copolymers containing OH-groups are used together with a hardener in the form of polyisocyanates which may be blocked, polycarboxylic acids and/or their anhydrides, amino resins or phenolic resins, always alon alone or in a blend.

8. Use according to claim 5, 6 or 7, characterized in that the copolymers containing OH-groups are used in the form of reaction products with polycarboxylic anhydrides for the hardening of polyepoxy compounds.

**Revendications**

1. Procédé de préparation de copolymérisats comprenant des groupes OH par mise en réaction radicalaire de

A) 10 à 30% en poids d'esters glycidyliques d'acides monocarboxyliques aliphatiques saturés ayant un atome de carbone alpha tertiaire ou quaternaire, lesdits esters contenant 12 à 14 atomes de carbone et
B) 90 à 70% en poids d'au moins deux monomères insaturés copolymérisables dont au moins l'un contient au moins un groupe COOH.

le composant (A) étant introduit d'abord et polymérisé à une température d'au moins 140°C avec le composant (B) et un initiateur radicalaire, le composant (B) contenant un monomère qui comporte des groupes COOH, caractérisé en ce que, pour obtenir un copolymérisat ayant une faible viscosité, on introduit d'abord le composant (A) et on le met en réaction à une température de 140 à 200°C avec le composant (B) dans une phase de polymérisation en masse jusqu'à ce qu'on atteigne une conversion d'au moins 95%, étant entendu que le composant (B) contient au moins 3,3% en poids du monomère comprenant les groupes COOH.

2. Procédé selon la revendication 1, caractérisé en ce que le composant (B) consiste en un mélange de monomères acryliques et de substances vinylaromatiques.

3. Procédé selon la revendication 1 ou 2, caractérisé en ce que le composant (B) est constitué par un mélange de

a) 3,3 à 20% en poids d'acides acrylique et/ou méthacrylique,
b) 0 à 43% en poids d'au moins un ester hydroxyalkylique des acides acrylique et/ou méthacrylique dont le reste hydroxyalkyle comporte 2 à 4 atomes de carbone,
c) 0 à 57% en poids d'au moins un ester des a acides acrylique et/ou méthacrylique et d'un alcool monovalent ayant 1 à 8 atomes de carbone et
d) 0 à 72% en poids d'au moins une substance vinyl-aromatique,

étant entendu que la somme des composants (B) est toujours de 100 et que la somme des esters b) et c) ne dépasse avantageusement pas 75% en poids.

4. Procédé selon l'une ou plusieurs des revendications 1 à 3, caractérisé en ce que la copolymérisation est effectuée en présence de jusqu'à 5% en poids d'un solvant.

5. Utilisation des produits obtenus selon le procédé d'une ou de plusieurs des revendications 1 à 4 pour la préparation de revêtements.

6. Utilisation selon la revendication 5 en mélange avec des polyisocyanates, seuls ou ensemble avec des composés organiques de l'étain et éventuellement en présence d'amines tertiaires.

7. Utilisation selon la revendications 5 ou 6, caractérisée en ce que, pour obtenir des revêtements durcis à la chaleur, on met en oeuvre les copolymérisats contenant les groupes OH ensemble avec un agent durcissant sous la forme de polyisocyanates éventuellement masqués, d'acides polycarboxyliques et/ou leurs anhydrides, de résines aminiques ou phénoliques, respectivement seuls ou en mélange.

8. Utilisation selon les revendications 5, 6 ou 7, caractérisée en ce que les copolymérisats comprenant les groupes OH sont mis en oeuvre sous forme de produits provenant de la réaction avec des anhydrides d'acides polycarboxyliques pour durcir des composés polyépoxy.